(19) Europäisches Patentamt
European Patent Office
Office européen des brevets

(11) EP 1 090 374 B1

(12) # EUROPÄISCHE PATENTSCHRIFT

(45) Veröffentlichungstag und Bekanntmachung des Hinweises auf die Patenterteilung:
**25.09.2002 Patentblatt 2002/39**

(21) Anmeldenummer: **99941389.1**

(22) Anmeldetag: **25.06.1999**

(51) Int Cl.[7]: **G06T 5/00**

(86) Internationale Anmeldenummer:
**PCT/DE99/01855**

(87) Internationale Veröffentlichungsnummer:
**WO 99/067744 (29.12.1999 Gazette 1999/52)**

(54) **VERFAHREN ZUM VERARBEITEN VON BILDDATEN**

METHOD FOR PROCESSING IMAGE DATA

PROCEDE POUR TRAITER DES DONNEES D'IMAGE

(84) Benannte Vertragsstaaten:
**DE FR GB IT**

(30) Priorität: **25.06.1998 DE 19828396**

(43) Veröffentlichungstag der Anmeldung:
**11.04.2001 Patentblatt 2001/15**

(73) Patentinhaber: **CGK Computer Gesellschaft Konstanz mbH**
**78467 Konstanz (DE)**

(72) Erfinder:
- **FREI, Bernhard**
  **D-78465 Konstanz (DE)**
- **SCHNITZLEIN, Markus**
  **D-78315 Radolfzell (DE)**

(74) Vertreter: **Schaumburg, Thoenes, Thurn**
**Patentanwälte**
**Postfach 86 07 48**
**81634 München (DE)**

(56) Entgegenhaltungen:
**EP-A- 0 632 402**

- **CARRON T ET AL: "FUZZY COLOR EDGE EXTRACTION BY INFERENCE RULES QUANTITATIVE STUDY AND EVALUATION OF PERFORMANCES" PROCEEDINGS OF THE INTERNATIONAL CONFERENCE ON IMAGE PROCESSING. (ICIP),US,LOS ALAMITOS, IEEE COMP. SOC. PRESS,Oktober 1995 (1995-10), Seite 181-184 XP000623941 ISBN: 0-7803-3122-2**
- **ZHERU CHI ET AL: "IMAGE SEGMENTATION USING FUZZY FULES DERIVED FROM K-MEANS CLUSTERS" JOURNAL OF ELECTRONIC IMAGING,US,SPIE + IS&T, Bd. 4, Nr. 2, April 1995 (1995-04), Seite 199-206 XP000511414 ISSN: 1017-9909**
- **"CHARACTER PREPROCESSING AND FILTERING FOR CONVENIENCE AMOUNT RECOGNITION" IBM TECHNICAL DISCLOSURE BULLETIN,US,IBM CORP. NEW YORK, Bd. 34, Nr. 4B, September 1991 (1991-09), Seite 326-329 XP000189504 ISSN: 0018-8689**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 090 374 B1

Printed by Jouve, 75001 PARIS (FR)

## Beschreibung

Die Erfindung betrifft ein Verfahren zum Verarbeiten von Bilddaten, bei dem mindestens ein Ausschnitt eines Formulares rasterartig abgetastet und in ein Digitalbild mit Bildpunkten gewandelt wird, die Farbe eines jeden Bildpunktes gemäß der HSB-Farbdarstellung als Farbton R, Sättigung S und Helligkeit B dargestellt wird und dem jeweiligen Bildpunkt ein Grauwert GW zugeordnet wird.

Ein solches Verfahren läßt sich überall dort einsetzen, wo große Mengen an Formularen rasterartig eingelesen und die in ihnen enthaltenen Informationen mittels optischer Zeichenerkennung für die weiterführende elektronische Datenverarbeitung aufbereitet werden. Formulare haben im allgemeinen Strukturierungshilfen, auch Streuinformationen genannt, die dafür sorgen, daß die von einem Anwender eingeholten Informationen, die als Nutzinformationen bezeichnet werden, auf bestimmte Weise geordnet und in einer einheitlichen Form auf dem Formular aufgebracht werden. Für die sichere und schnelle Texterkennung ist es erforderlich, die Streuinformationen von den Nutzinformationen zu trennen.

Bei der automatisierten Belegverarbeitung werden zum Beispiel für die Streuinformationen Farben gewählt, die sich leicht durch optische Filter herausfiltern lassen. Nachteilig an dem Verfahren ist, daß sich damit nur wenige zusammenhängende Wellenlängenbereiche des Lichtes herausfiltern lassen.

Ein anderes bekanntes Verfahren ist die digitale Farbfilterung der Farben der Bildpunkte eines rasterartig eingelasenen Formulares. Damit können viele, auch nicht zusamnenhängende Wellenlängenbereiche des Lichtes herausgefiltert werden. Nachteilig bei diesem digitalen Filterverfahren ist, daß im Prinzip jeder auf dem Formular vorkommenden Farbe die Eigenschaft Streu- oder Nutzinformation zugewiesen werden muß, damit entschieden werden kann, ob ein Bildpunkt mit einer solchen Farbe Nutz- oder Streuinformatlon trägt. Durch Schwankungen in der Beleuchtung der Formulare während des Einlesens treten jedoch Farbveränderungen auf, und auch innerhalb eines Formulares entstehen durch benachbarte Bildpunkts mit unterschiedlichen Ferben Mischungen, die eine eindeutige Zuordnung der Bildpunkte oft nicht mehr zulassen.

Das Dokument CARRON T ET AL: "FUZZY COLOR EDGE EXTRACTION BY IN-FERENCE RULES QUANTITATIVE STUDY AND EVALUATION OF PERFORM-ANCES PROCEEDINGS OF THE INTERNATIONAL CONFERENCE ON IMAGE PROCESSING", (ICIP), US, LOS ALAMITOS, IEEE COMP. SOC. PRESS, Oktober 1995 (1995-10), Seite 181-184 XP000623941 ISBN: 0-7803-3122-2 wird als nächstliegender Stand der Technik gegenüber dem Gegenstand des Anspruchs 1 angesehen. Es offenbart ein Verfahren zum Verarbeiten von Bilddaten, wobei die Farbe eines jeden Bildpunktes im HSI Farbraum dargestellt wird.

Gemäß der Fuzzy-Technik wird die Zugehörigkeit der Pixel zur Kantenklasse mittels Farbdifferenzen zu benachbarten- Bildpunkten aus verschiedenen Zugehörigkeitsfunktionen ermittelt. Die Starke der Zugehörigksit zur Kantenklasse wird durch kombinierte Minimums- und Maximumsbildung ermittelt.

Aus der nicht vorveröffentlichten US 5,778,156 ist ein Verfahren zum Verarbeiten von Bilddaten bekannt, bei dem mindestens ein Ausschnitt eines Formulars rasterartig abgetastet und in ein Digitalbild mit Bildpunkten gewandelt wird, bei dem die Farbe eines jeden Bildpunktes dargestellt wird und gemäß der Fuzzy-Technik die Zugehörigkeiten der Farbe eines jeden Bildpunktes zu drei Bildklassen aus verschiedenen Zugehörigkeitsfunktionen ermittelt werden und bei dem ferner die Gesamtzugehörigkeit zu einer Bildklasse durch Minimumbildung ermittelt und abhängig von den ermittelten Zugehörigkeiten der jeweilige Bildpunkt weiter verarbeitet wird.

Es ist Aufgabe der Erfindung, eine möglichst einfache, anwendungebezogene Segmentatlonsmethode basierend auf der Fuzzy-Technik zu entwickeln.

Diese Aufgabe wird erfindungsgemäß durch ein Verfahren mit den Merkmalen des Anspruchs 1 gelöst. Vorteilhafte Welterbildungen sind in den abhängigen Ansprüchen angegeben.

Das Verfahren bietet den Vorteil, daß eine Darstellung der Farben der Bildpunkte Im HSB-Farbmodell es gestattet, auf einfache Welse Zugehörigkeltsfunktionen abhängig von Farbkomponenten gemäß der Fuzzy-Technik zu definieren und einzusetzen. Die Verwendung der Fuzzy-Technik ermöglicht es, einen großen Teil der Zuweisung der Eigenschaft Streuinformation oder Nutzinformation zu den Farben der einzeinen Bildpunkte automatisch durchzuführen. Dabei werden die Bildpunkte und ihre Farben Farbklassen zugeordnet.

Es ist vorteilhaft, mindestens drei Farbklassen zu verwenden, da die Entscheidung Nutzinformation oder Streuinformation nicht immer eindeutig möglich ist, und diese Entscheldung in den meisten nicht eindeutigen Fällen durch eine geeignete Wahl von mindestens einer zusätzlichen Farbklasse umgangen wird. Diese drei Farbklassen sind UB, SF und BF, wobei der Farbklasse UB überwiegend unbunte Farben und der Farbklasse SF die Schreibfarben zugeordnet werden, mit denen die Nutzinformationen geschrieben sind. Der Farbklasse BF werden überwiegend Blindfarben zugeordnet, mit denen die Streuinformationen auf dem Formular aufgedruckt sind.

Bei einem Ausführungsbeispiel wird der Wert der Helligkeit B eines Bildpunktes in eine skalierte Helligkeit Y mit dem Wertebereich 0 bis 1 umgewandelt, und der Grauwert GW wird abhängig von der skalierten Helligkeit Y festgelegt. Da in diesem Wertebereich auch die Zugehörlgkeiten definiert sind, läßt sich für die Festlegung des Grauwertes GW die skalierte Helligkeit Y mit dem Maximalwert M vergleichen. Dadurch wird eine erhöhte Trennschärfe erzlelt.

Bei einem weiteren Ausführungsbeispiel wird dem jeweiligen Bildpunkt als Grauwert GW die skalierte Helligkeit Y zugewiesen, wenn der Maximalwert M zur ersten Farbklasse gehört. Auch Bildpunkte mit sogenannten unbunten Farben wie zum Beispiel Grau bekommen bei der Darstellung der Farbe im HSB-Modell einen Farbton H zugewiesen. Bekannte digitale Filterverfahren weisen Bildpunkten mit solchen Farben dann oft eine falsche Farbe zu, was zu einem Verlust an Information oder zu einer Minderung des Kontrastes führt. Diese Probleme lassen sich durch die oben beschriebene Zuweisung eines Grauwertes GW zu Bildpunkten mit Farben der ersten Farbklasse lösen.

Bei einem anderen Ausführungsbeispiel wird einem Bildpunkt der Grauwert GW nach der Beziehung

$$GW = MIN(Y,1-SFMIN)$$

zugewiesen, wenn der Maximalwert M zur zweiten Farbklasse gehört. Das hat den Vorteil, daß Bildpunkte mit Farben, die zur zweiten Farbklasse gehören, das sind vorwiegend Nutzinformationen, im dunklen Grauton dargestellt werden. Dadurch läßt sich eine Erhöhung des Kontrastes erzielen.

Eine Variante sieht vor, daß einem Bildpunkt der Grauwert GW gemäß der Beziehung

$$GW = MAX(Y,BFMIN)$$

zugewiesen wird, wenn der Maximalwert M zur dritten Farbklasse gehört. Bildpunkte mit Farben der dritten Farbklasse, also vor allem Streuinformationen, werden dann aufgehellt dargestellt.

Bei einem weiteren Ausführungsbeispiel wird für jeden Bildpunkt ein Wert L nach der Beziehung

$$L = MAX(UBMIN,SFMIN,BFMIN)$$

gebildet, sodann wird der Wert SOMIN gemäß der Beziehung

$$SOMIN = 1 - L$$

gebildet, worin SOMIN die Zugehörigkeit des Bildpunktes zu einer vierten Farbklasse ist. Durch diese vierte Farbklasse können Bildpunkte, die nicht eindeutig zu einer der anderen Farbklassen gehören, gesondert bearbeitet werden. Dadurch ist das Verfahren vielseitiger einsetzbar.

Wenn einem Bildpunkt der vierten Farbklasse in einem Ausführungsbeispiel als Grauwert GW der Minimalwert aus der skalierten Helligkeit Y und dem Wert 1-SOMIN nach der Beziehung

$$GW = MIN(Y,1-SOMIN)$$

zugeordnet wird, dann kann bei Formularen mit sehr dünner Schrift die Schrift verstärkt werden, indem man Bildpunkte der vierten Farbklasse abdunkelt.

Es ist auch ein Ausführungsbeispiel möglich, bei dem bei Formularen mit sehr viel Streuinformation zur weiteren Kontraststeigerung Bildpunkte der vierten Farbgruppe aufgehellt werden.

Bei einer Weiterentwicklung der Erfindung wird die Häufigkeit, mit der Bildpunkte mit bestimmten Farbtönen H in mindestens einem Ausschnitt des Formulares vorkommen, in Form einer Häufigkeitsverteilung über den Farbton H dargestellt, und die Zugehörigkeitsfunktionen $zSF_H$,$zBF_H$ haben in Bereichen mit Farbtönen aus dieser Häufigkeitsverteilung einen rechteckförmigen, dreieckförmigen, trapezförmigen oder S-förmigen Verlauf nach Art einer halben oder einer ganzen Glockenkurve. Die Darstellung der Häufigkeitsverteilung erleichtert die Auswahl von Bereichen an Farbtönen, die zu den Streu- oder Nutzinformationen gehören. Es ist dann vorteilhaft, die Häufigkeitsverteilung nur aus einem Ausschnitt des Formulares zu bestimmen, wenn große Teile des Formulares keine Streuoder Nutzinformationen enthalten, denn so erhält man ohne nennenswerte Störeinflüsse Informationen über die verwendeten Farbtöne H. Außerdem läßt sich die Verarbeitungszeit verkürzen, wenn die Häufigkeitsverteilung nur aus einem Ausschnitt des Formulares bestimmt wird.

Ein Ausführungsbeispiel der Erfindung, bei dem eine punktweise erfaßte farbige Vorlage in ein kontrastreiches Graustufenbild umgewandelt wird, ist nachfolgend anhand der Zeichnung näher erläutert. Es zeigen :

Fig. 1 einen Ausschnitt aus einem Formular mit Nutz- und Streuinformation,

Fig. 2 einen aufbereiteten Ausschnitt des Formulares mit hervorgehobener Nutzinformation,

Fig. 3 einen Ablauf zur Definition von Farbklassen und zur Zuweisung eines Grauwertes,

Fig. 4 eine Gruppe von Verfahrensschritten zur Zuweisung eines Grauwertes,

Fig. 5 eine graphische Darstellung der Zugehörigkeit zur Farbklasse UB abhängig von der Helligkeit,

Fig. 6 eine Darstellung der Zugehörigkeitsfunktion zur Farbklasse UB als Funktion der Sättigung,

Fig. 7 eine Zugehörigkeitsfunktion für die Farbklasse SF in Abhängigkeit von der Helligkeit,

Fig. 8 die Zugehörigkeit zur Farbklasse SF in Abhängigkeit von der Sättigung,

Fig. 9 eine Darstellung der Zugehörigkeitsfunktion zur Farbklasse BF abhängig von der Helligkeit,

Fig. 10 die Zugehörigkeit zur Farbklasse BF als Funktion der Sättigung,

Fig. 11 eine Häufigkeitsverteilung der Bildpunkte mit gleichen Farbtönen sowie eine Zugehörigkeitsfunktion zur Zuordnung von Farbtönen zu der Farbklasse SF, und

Fig. 12 die Verteilung der Häufigkeit der Bildpunkte, die gleiche Färbtöne haben sowie die Zugehörigkeit zur Farbklasse BF als Funktion des Farbtones.

Bei der automatisierten Belegverarbeitung werden in einer OCR-Einheit (optical character recognition) Formulare rasterartig abgetastet und die zu einzelnen Bildpunkten gehörenden elektrischen Signale als Digitalwerte abgespeichert. Die in diesen Bildpunkten enthaltene Farbinformation wird mittels einer Bildmusterverarbeitung, beispielsweise mithilfe von Texterkennungsroutinen, ausgewertet. Ein Formular zeichnet sich dadurch aus, daß die von einem Anwender einzuholenden Informationen in einer strukturierten Form abgefragt werden. So kann zum Beispiel durch Kästchen ein Zeichenabstand und eine ungefähre Schriftgröße vorgegeben werden. Oft sind die Kästchen farbig unterlegt, damit sie sich deutlich vom Hintergrund abheben. Zusätzlich kann ein solches Formular weitergehende Erläuterungen in einer bestimmten Farbgebung enthalten. Die Erläuterungen und die Strukturierungshilfen werden als Streuinformationen, die vom Anwender eingeholten Informationen als Nutzinformationen bezeichet.

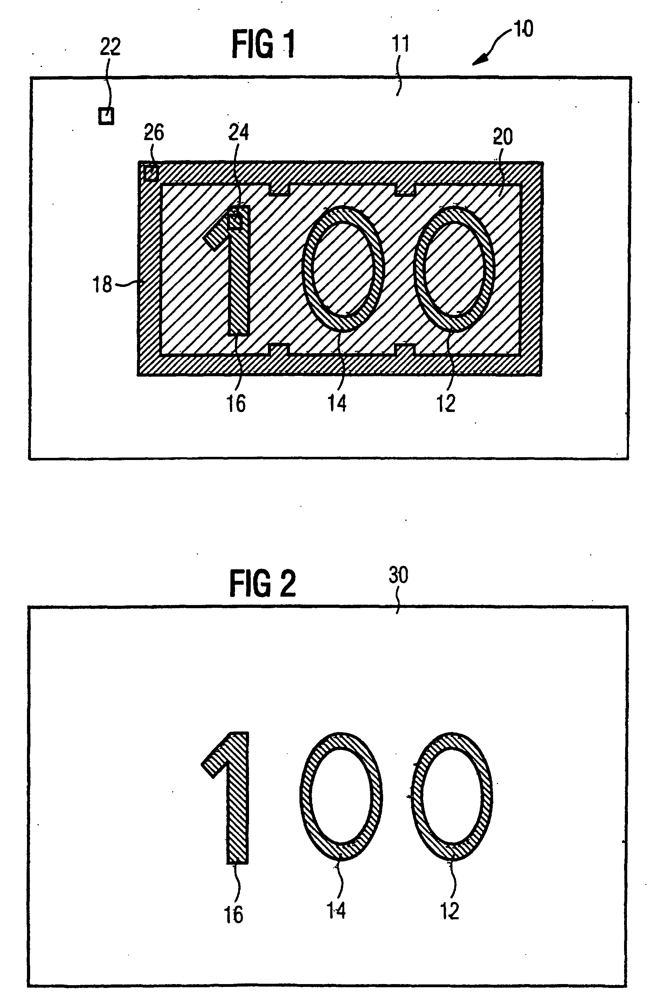

Figur 1 zeigt aus einem Formular 10 einen Ausschnitt, der einen Hintergrund 11, Nutzinformationen 12,14,16 und Streuinformationen 18,20 enthält. Die Nutzinformationen 12,14,16 sind hier als Zahlen dargestellt; als Streuinformationen 18,20 ist schraffiert ein unterteiltes Kästchen 18 eingezeichnet, das mit einer farbigen Fläche 20 unterlegt ist. Dieses Formular 10 wird wie erwähnt in Form von einzelnen Bildpunkten bei der Belegverarbeitung von einer OCR-Einheit nach einem vorgegebenen Raster unter Einbeziehung der Farbinformation eingelesen. In Figur 1 sind beispielsweise drei solche Bildpunkte 22,24,26 eingezeichnet.

Aus der Farbmetrik ist bekannt, daß eine Farbe F durch drei Maßzahlen vollständig und eindeutig beschrieben werden kann. Bei dem computergestützten Einlesen und Verarbeiten der Farbe F eines Bildpunktes verwendet man üblicherweise eine RGB-Farbdarstellung, bei der eine Farbe F durch additive Mischung aus den Grundfarben Rot, Grün,Blau erzeugt wird. R,G,B sind trichromatische Farbmaßzahlen, im folgenden Farbwerte R,G,B genannt, die Beträge angeben, mit denen die Grundfarben Rot,Grün,Blau an der Mischung der Farbe F beteiligt sind, gemäß der Beziehung:

$$F = R + G + B = (R,G,B) .$$

Die Grundfarben Rot,Grün,Blau sind durch internationale Ubereinkunft festgelegt, wobei Rot die Wellenlänge 700 nm, Grün 546,1 nm und Blau die Wellenlänge 435,8 nm hat.

Die einzelnen Farbwerte R,G,B nehmen bei der computergestützten Verarbeitung nur diskrete Werte an. Üblich sind zum Beispiel digitale Werte mit einer Länge von 8 Bit, wobei die Farbe F eines einzelnen Bildpunktes mit den drei Farbwerten R,G,B als Wert mit 24 Bit Länge dargestellt wird.

Von der OCR-Einheit sollen die Nutzinformationen 12,14,16 erkannt und an nachgeschaltete Einheiten weitergeleitet werden. Das Erkennen der Nutzinformationen 12,14,16 auf dem Formular 10 ist für das menschliche Auge verhältnismäßig einfach, wobei die Streuinformationen 18,20 nur wenig dabei stören. Damit die OCR-Einheit die Nutzinformationen 12,14,16 erkennen kann, müssen die Streuinformationen 18,20 durch einen geeigneten Filterprozeß weitgehend unterdrückt werden.

Figur 2 zeigt eine Darstellung des Formulares 10 nach Figur 1 mit idealer Filterung. Die Bildpunkte, die Nutzinformationen 12,14,16 tragen, sind schraffiert gezeichnet und haben einen hohen Schwarzanteil; sie heben sich kontrastreich von dem Hintergrund 30 ab. Die Bildpunkte, die Streuinformationen tragen, sind weiß dargestellt und heben sich von dem Hintergrund 30 nicht ab. Diese Idealdarstellung läßt sich nur in den wenigsten Fällen erreichen. Zumindest ist für die Zeichenerkennung aber eine Darstellung mit ausreichender Trennschärfe erforderlich, bei der die Nutzinformationen 12,14,16 deutlich zu erkennen sind und sich die Streuinformationen 18,20 nicht oder nur wenig vom Hintergrund 30 unterscheiden.

Üblicherweise werden für die Streuinformationen 18,20 eines solchen Formulares 10 Farben F verwendet, die sich leicht durch optische oder digitale Filterverfahren von den Farben F der Nutzinformationen 12,14,16 trennen lassen. Problematisch wird ein solches Filterverfahren, wenn mehrere, nicht zusammenhängende Farben F für die Streuinformationen 18,20 benutzt werden, oder wenn der Hintergrund 11 des Formulares 10 farbig gestaltet ist. Mit optischen Filterverfahren lassen sich dann oft die Nutzinformationen 12,14,16 nicht mit ausreichender Trennschärfe für die anschließende Texterkennung von den Streuinformationen 18,20 und dem Hintergrund 11 trennen.

Bei bekannten digitalen Filterverfahren ist es in diesem Fall notwendig, jeder Farbe F eine Eigenschaft zuzuweisen, die charakterisiert, ob ein Bildpunkt mit dieser Farbe F Streuinformationen 18,20 oder Nutzinformationen 12,14,16 trägt. Es kann auch jedem Bildpunkt entsprechend seiner Farbe F ein Grauwert GW zugewiesen werden. Als Grau werden bekanntlich sogenannte unbunte Farben bezeichnet, deren Sättigung S gleich Null ist. Die Sättigung S ist ein Maß für die spektrale Reinheit. Die Sättigung S ist definiert als:

$$S = 1 - (3\ \mathrm{MIN}(R,G,B)/(R+G+B))$$

Darin bezeichnet MIN(R,G,B) den kleinsten Wert von R,G,B. Eine Farbe ist dann als Grau zu werten, wenn alle drei Farbwerte R,G,B gleich sind. Dann reicht eine Maßzahl, der Grauwert GW

$$GW = R = G = B$$

zur Kennzeichnung aus. Abhängig vom Betrag des Grauwertes GW ergibt sich eine graue Farbe mit unterschiedlicher Helligkeit. Die Farbe Schwarz hat als Binärwert in Dezimalschreibweise ausgedrückt den Grauwert GW=0 und Weiß den Grauwert GW=255. Wandelt man ein farbig erfaßtes Formular 10 in ein Graustufenbild um, erfolgt eine Datenreduktion von ursprünglich 24 Bit auf 8 Bit pro Bildpunkt, da statt der drei unabhängigen Farbwerte R,G,B nun eine einzige Kenngröße, der Grauwert GW ausreicht. Texterkennungsroutinen sind dann oft in der Lage, die Nutzinformationen 12,14,16 aus einem so erzeugten Graustufenbild zu extrahieren.

Tragen bereits Bildpunkte des Formulares 10 solche unbunten Farben F, sind also zum Beispiel Bildpunkte 22 des Hintergrundes 11 weiß oder sind Bildpunkte 24 mit Nutzinformation 12,14,16 schwarz, dann kann es durch ungleichmäßige Beleuchtung oder falsche Justierung der OCR-Einheit dazu kommen, daß die unbunten Farben F solcher Bildpunkte 22,24,26 nicht richtig erkannt werden und als Farben F mit geringer Sättigung S weiterverarbeitet werden. Wenn zum Beispiel die Bildpunkte 24 mit Nutzinformation 12,14,16 schwarz und die Bildpunkte 26 mit Streuinformation 18,20 rot sind, kann es vorkommen, daß die schwarze Farbe F eines Bildpunktes 24 als dunkelrote Farbe F mit geringer Sättigung S erkannt wird. Wenn jetzt durch Anwendung eines herkömmlichen digitalen Filterverfahrens die Farbe Rot durch die Farbe Weiß ersetzt wird, damit die Bildpunkte 26 mit Streuinformation 18,20 für die Texterkennung unsichtbar werden, dann erhält auch der Bildpunkt 24 die Farbe Weiß und es geht Nutzinformation 12,14,16 verloren

In einem anderen Beispiel wird angenommen, daß die Bildpunkte 24 mit Nutzinformation 12,14,16 blau sind. Wird die weiße Farbe F des Bildpunktes 22 beim Einlesen als hellblaue Farbe F mit geringer Sättigung S erkannt, dann kann ein herkömmliches digitales Filterverfahren dazu führen, daß dem Bildpunkt 22 eine schwarze Farbe zugewiesen wird und die Trennschärfe nimmt ab.

Im folgenden wird ein Verfahren beschrieben, bei dem ein farbig eingelesenes Formular 10 in ein Graustufenbild mit hoher Trennschärfe überführt wird, wobei die Bildpunkte 24 mit Nutzinformationen 12,14,16 deutlich zu erkennen sind und die Bildpunkte 26 der Streuinformationen 18,20 sich nur wenig von den Bildpunkten 22 des Hintergrundes unterscheiden.

Das Verfahren benutzt das anschauliche HSB-Farbmodell (Hue, Saturation, Brightness). Durch die Darstellung der Farben in diesem HSB-Farbmodell können zusätzlich zum Farbton H auch die Sättigung S und die Helligkeit B einer Farbe bei der Zuweisung eines Grauwertes berücksichtigt werden.

Die Darstellung der Farben läßt sich aus dem RGB-Farbmodell ind das HSB-Farbmodell überführen. Der Farbton H ist definiert als:

$$H = \arccos\left( ((R-G) + (R-B))/2\ SQRT((R-G)^2 + (R-B)(G-B)) \right).$$

SQRT ist die Quadratwurzel des Argumentes von SQRT. H reicht in dieser Darstellung von 0° bis 360° und ist ein Maß für die Wellenlänge. Rot entspricht zum Beispiel H=0° und Blau entspricht H=240°.

Die Sättigung S ist weiter oben bereits definiert und reicht von 0 bis 100%. Je größer die Sättigung S ist, desto intensiver und leuchtender ist die Farbe F. Für die Helligkeit B gilt:

$$B = (R + G + B)/3.$$

Die Helligkeit wird ebenfalls in Prozent angegeben und bezieht sich auf den Schwarzanteil. 0% steht für maximalen Schwarzanteil und 100% für keinen Schwarzanteil. Reines Blau besitzt im HSB Farbmodell die Kenngrößen H=240°, S=100% und B=100%.

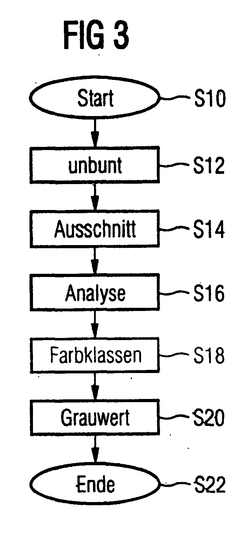

Figur 3 zeigt einen Ablauf zur Definition von Farbklassen und zur Zuweisung eines Grauwertes GW zu den Bildpunkten des punktweise eingelesenen Formulares 10 abhängig von deren Farbe F und der Zugehörigkeit der Farbe F zu den Farbklassen. Die Zugehörigkeit einer Farbe F zu einer der Farbklassen ist dabei unter Verwendung der Fuzzybeschreibung bestimmt. Das heißt, die Zugehörigkeit kann nicht nur binäre Werte "0" und "1" im Sinne von "nicht zugehörig" bzw. "zugehörig" annehmen, sondern sie wird über eine Zugehörigkeitsfunktion bestimmt, die Werte zwischen 0 und 1 abhängig von einer Variablen annehmen kann. Eine 0 bedeutet hierbei die kleinste und eine 1 die größte Zugehörigkeit zu der jeweiligen Farbklasse.

Im Verfahrensschritt S10 wird der Ablauf gestartet. Dann wird im Schritt S12 eine sogenannte "unbunte", erste Farbklasse UB definiert. Für die Farbklasse UB werden Grenzen für die Helligkeit B und die Sättigung S festgelegt, wie weiter unten noch näher erläutert wird. Eine Farbe F hat eine große Zugehörigkeit zur Farbklasse UB, wenn die Helligkeit B oder die Sättigung S außerhalb dieser Grenzen liegen.

Im Schritt S14 kann vom Benutzer ein zu analysierender Bereich des Formulares 10 ausgewählt werden. Das ist immer dann sinnvoll, wenn auf dem Formular 10 nur an wenigen Stellen Streu- oder Nutzinformationen vorhanden sind. Es wird dann für die folgenden Verfahrensschritte ein Bereich ausgewählt, in dem vorwiegend Streu- und Nutzinformationen auf dem Formular 10 aufgebracht sind.

Im Schritt S16 erfolgt eine Häufigkeitsanalyse der Bildpunkte nach Farbtönen H in dem zuvor ausgewählten Bereich oder gegebenenfalls des ganzen Formulares 10. Bei dieser Analyse werden nur Bildpunkte mit Farbtönen H der Farben F berücksichtigt, deren Zugehörigkeit $ZUB_B$,$ZUB_S$ zur Farbklasse UB abhängig von der Helligkeit B oder der Sättigung S kleiner als 0,5 ist. Für die verbleibenden Bildpunkte wird die Anzahl ermittelt, die denselben Wert für den Farbton H innerhalb vorgegebener Grenzen haben. Beispielsweise erfolgt eine Analyse nach maximal 65536 Farbtönen H. Das Ergebnis der Analyse wird dem Benutzer als Histogramm für die weitere Bearbeitung graphisch dargestellt. Dieses Histogramm gibt an, mit welcher Häufigkeit Bildpunkte mit gleichem Farbton H auftreten. Ein Beispiel für ein solches Histogramm wird später noch gegeben. Auf die Häufigkeitsanalyse kann verzichtet werden, wenn die Farben F, die auf dem Formular 10 vorkommen, und damit die vorkommenden Farbtöne H bekannt sind.

Im Verfahrensschritt S18 werden den Bildpunkten mit Farben F Zugehörigkeiten zu weiteren drei Farbklassen zugeordnet, nämlich zusätzlich zur bereits erwähnten unbunten Farbklasse UB die Zugehörigkeiten zur Farbklasse BF (Blindfarbe), zur Farbklasse SF (Schriftfarbe) und zur Farbklasse SO (sonstiges). Die Zugehörigkeiten $ZBF_B$,$ZBF_S$ eines Bildpunktes und dessen Farbe F zur Farbklasse BF (Blindfarbe) wird anhand zweier Zugehörigkeitsfunktionen $zBF_B$,$zBF_S$ abhängig von der Helligkeit B und der Sättigung S bestimmt. Außerdem wird in der beim Schritt S16 ermittelten Häufigkeitsverteilung der Farbtöne H mindestens ein Bereich BBF von Farbtönen H ausgewählt, innerhalb dessen die Zugehörigkeit $ZBF_H$ der Bildpunkte, die Farbtöne H haben, zur Farbklasse BF mithilfe einer Zugehörigkeitsfunktion $zBF_H$ festgelegt wird. Beispiele für eine oder mehrere solcher Zugehörigkeitsfunktionen $zBF_H$ werden weiter unten noch gezeigt. Denjenigen Bildpunkten werden große Zugehörigkeiten $ZBF_B$,$ZBF_S$,$ZBF_H$ zur Farbklasse BF zugewiesen, die Farben F haben, in denen die Streuinformation 18,20 auf dem Formular 10 aufgebracht ist.

Ahnlich wird mit den Bildpunkten und deren Farben für die Zuordnung zur Farbklasse SF (Schreibmittelfarbe) verfahren. Große Zugehörigkeiten zur Farbklasse SF erhalten die Bildpunkte mit den Farben F, welche die Nutzinformationen 12,14,16 in der Farbe des verwendeten Schreibmittels tragen. Auch hier werden Zugehörigkeitsfunktionen $zSF_B$,$zSF_S$ für die Zugehörigkeit $ZSF_B$,$ZSF_S$ zur Farbklasse SF abhängig von der Helligkeit B und der Sättigung S definiert, und es wird ebenfalls mindestens ein Bereich BSF an Farbtönen H aus der Häufigkeitsverteilung nach Schritt S16 ausgewählt. Innerhalb des Bereiches BSF werden Bildpunkten mit Farbton H über eine Zugehörigkeitsfunktion $zSF_H$ Zugehörigkeiten $ZSF_H$ zur Farbklasse SF abhängig von diesem Farbton H zugeordnet. Beispiele für die Zugehörigkeitsfunktionen $zSF_B$,$zSF_S$,$zSF_H$ werden später noch gegeben.

Der vierten Farbklasse SO werden Bildpunkte mit Farben F zugeordnet, die keiner anderen Farbklasse UB, BF,SF angehören. Die Art der Zuordnung wird später noch erläutert. Diese Farbklasse SO gibt dem Benutzer eine weitere Möglichkeit, in den Filterprozeß einzugreifen. Wenn die Nutzinformationen 12,14,18 der Formulare zum Beispiel mit sehr dünnen Bleistiftstrichen aufgebracht sind, ist es vor allem wichtig, daß keine Nutzinformationen verloren gehen. Dann werden Bildpunkte mit Farben der Farbklasse SO abgedunkelt. Wenn auf dem Formular die Streuinformationen 18,20 überwiegen, ist es dagegen wichtiger, die Streuinformationen zu beseitigen und dadurch eine Kontraststeigerung zu erzielen. Bildpunkte mit Farben der Farbklasse SO lassen sich in diesem Fall durch Aufhellen zusätzlich abschwächen.

Im Verfahrensschritt S20 wird für jeden Bildpunkt und dessen Farbe F ein Minimalwert UBMIN,SEMIN,BFMIN, SOMIN der Zugehörigkeiten zu jeder der Farbklassen UB,SF,BF,SO bestimmt. Unter diesen Minimalwerten UBMIN, SFMIN,BFMIN,SOMIN wird der Maximalwert M bestimmt. Die Farbe F wird dann der Farbklasse SF,BF,UB,SO zugewiesen, die zu dem Maximalwert M gehört. Beispiele hierzu werden weiter unten noch erläutert.

Abhängig von ihrer Farbklasse SF,BF,UB,SO und ihrer Helligkeit B wird der Farbe F ein Grauwert GW zugewiesen. Dies bedeutet, daß jeder Bildpunkt mit dieser Farbe F anschließend diesen Grauwert GW hat. Auf die genaue Art der Grauwertzuweisung wird im folgenden noch genauer eingegangen. Im Schritt S22 wird der Ablauf beendet.

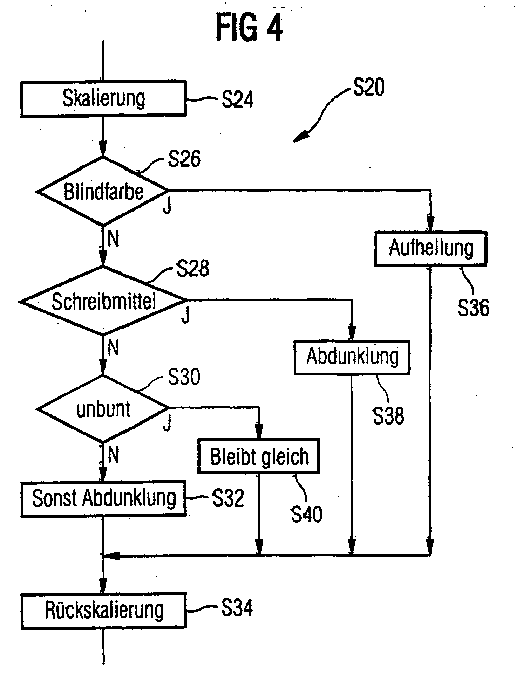

Figur 4 zeigt die einzelnen Schritte der Gruppe von Verfahrensschritten S20 aus Figur 3. Im Schritt S24 wird für jede Farbe F der Wert ihrer Helligkeit B durch den Maximalwert BMAX der Helligkeit geteilt, so daß die skalierten Werte Y für die Helligkeit B zwischen 0 und 1 liegen. Der Wert 1 steht dabei für die größte Helligkeit B, der Wert 0 steht für die geringste Helligkeit B.

Danach wird für jede Farbe F ermittelt, welcher der vier Farbklassen BF,SF,UB,SO sie zugeordnet wird. Es wird ein Minimalwert BFMIN der Zugehörigkeiten zur Farbklasse BF definiert. BFMIN ist der kleinste Wert der Zugehörigkeiten $ZBF_H$,$ZBF_B$,$ZBF_S$ zur Farbklasse BF in Abhängigkeit von dem Farbton H, der Helligkeit B und der Sättigung S. Sind im Schritt S18 mehrere Bereiche BBF von Farbtönen H der Farbklasse BF zugeordnet worden, dann wird für jeden Bereich BBF einzeln der Minimalwert der Zugehörigkeiten $ZBF_H$,$ZBF_B$,$ZBF_S$ bestimmt. Der größte dieser Werte wird im folgenden als Minimalwert BFMIN der Zugehörigkeiten der Farbe F zur Farbklasse BF verwendet.

Ähnlich dem gerade Beschriebenen wird ein Minimalwert SFMIN der Zugehörigkeiten zur Farbklasse SF als kleinster Wert der Zugehörigkeiten $ZSF_H$,$ZSF_B$,$ZSF_S$ definiert. Der Minimalwert UBMIN der Zugehörigkeiten zur Farbklasse UB wird als kleinster der Werte der Zugehörigkeiten $ZUB_B$,$ZUB_S$ zur Farbklasse UB in Abhängigkeit von der Helligkeit B und der Sättigung S definiert.

Anschließend wird für jeden Bildpunkt mit der Farbe F ein Wert L nach der Beziehung :

$$L = MAX(UBMIN,SFMIN,BFMIN)$$

gebildet, wobei MAX die Auswahl des größten Wertes unter den Werten UBMIN,BFMIN,SFMIN bedeutet. Abhängig von dem Wert L wird ein Minimalwert SOMIN zur Farbklasse SO definiert:

$$SOMIN = 1 - L .$$

Aus diesen Minimalwerten UBMIN,SFMIN,BFMIN,SOMIN wird der Maximalwert M bestimmt gemäß der Beziehung :

$$M = MAX(UBMIN,SFMIN,BFMIN,SOMIN)$$

Im Verfahrensschritt S26 wird überprüft, ob der Maximalwert M eines Bildpunktes mit der jeweiligen Farbe F zur Farbklasse BF gehört. Ist das nicht der Fall, dann wird im Schritt S28 überprüft, ob der Maximalwert M zur Farbklasse SF gehört. Ist auch das nicht der Fall, dann wird im Schritt S30 überprüft, ob der Maximalwert M zur Farbklasse UB gehört.

Wenn auch das nicht der Fall ist, dann wird der Maximalwert M der jeweiligen Farbe F eines Bildpunktes der Farbklasse SO zugeordnet, und es wird der Farbe F ein skalierter Grauwert GY wie folgt zugewiesen:

$$GY = MIN(Y,1\text{-}SOMIN).$$

Das heißt, die Farbe F erhält entweder den skalierten Wert Y ihrer Helligkeit B als skalierten Grauwert GY zugewiesen, oder wenn die Gesamtzugehörigkeit SOMIN zur Farbklasse SO groß ist und damit 1-SOMIN klein, erhält sie als skalierten Grauwert GY den Wert 1-SOMIN zugewiesen und damit einen dunkleren Wert. Im Schritt S34 wird der skalierte Grauwert GY mit dem maximalen Wert BMAX der Helligkeit B multipliziert. Das Ergebnis wird als Grauwert GW mit einer Länge von 8 Bit jedem Bildpunkt mit derselben Farbe F zugewiesen.

Wenn im Schritt S26 erkannt wird, daß ein Bildpunkt mit der jeweiligen Farbe F der Farbklasse BF zuzuordnen ist, dann wird allen Bildpunkten mit der Farbe F im Schritt S36 als skalierter Grauwert GY der größere der Werte Y und BFMIN zugewiesen, mit

$$GY = MAX(Y,BFMIN) .$$

Farben der Farbklasse BF bekommen demnach als skalierten Grauwert GY den skalierten Wert Y ihrer Helligkeit B oder sie werden aufgehellt, da es sich bei diesen Farben F der Farbklasse BF um die Farben F der Streuinformationen 18,20 handelt, die unterdrückt werden sollen. Danach folgt die Zuweisung eines Grauwertes GW zu allen Bildpunkten mit derselben Farbe F, wie bereits im Schritt S34 beschrieben.

Wird im Schritt S28 die Farbe F der Farbklasse SF zugeordnet, dann wird ihr als skalierter Grauwert GY im Schritt S38 der kleinere der Werte Y und 1-SFMIN zugewiesen.

$$GY = MIN(Y,1-SFMIN)$$

Farben F der Farbklasse SF behalten als Grauwert GY den skalierten Wert Y ihrer Helligkeit B, oder sie werden abgedunkelt, weil es sich hierbei um die Farben F der Nutzinformationen 12,14,16 handelt, die verstärkt werden sollen. Anschließend folgt wieder der Schritt S34.

Wird im Schritt S32 die jeweilige Farbe F als der Farbklasse UB am stärksten zugehörig erkannt, dann wird ihr als skalierter Grauwert GY im Schritt S40 der skalierte Wert Y ihrer Helligkeit B zugewiesen. Die eingangs erwähnten Probleme mit Bildpunkten, die Farben F mit sehr hoher oder sehr geringer Helligkeit B oder Sättigung S haben, werden dadurch vermieden, daß diesen Farben F unabhängig von ihrem Farbton H ein skalierter Grauwert GY zugewiesen wird. Es folgt der schon beschriebene Verfahrensschritt S34.

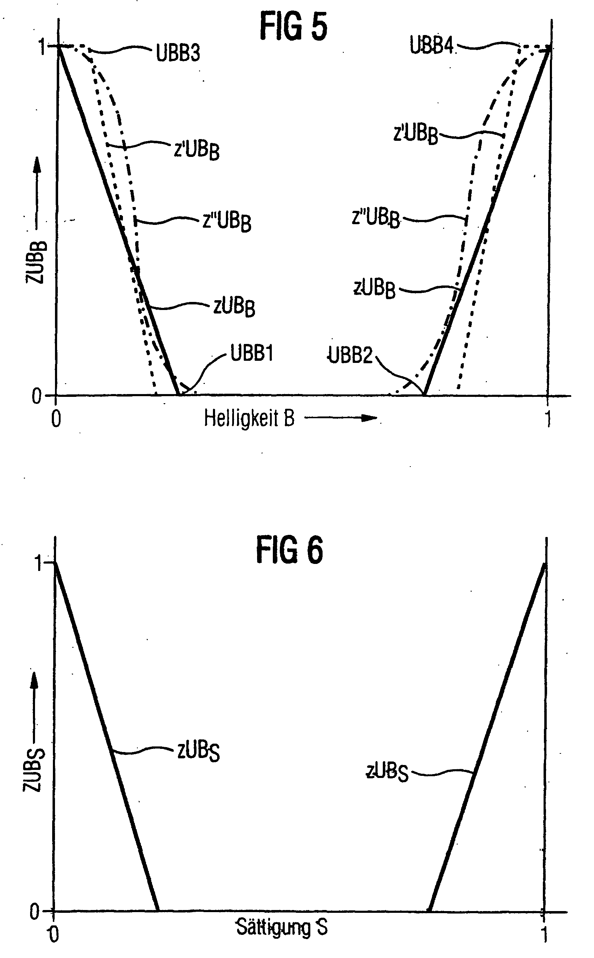

Figur 5 zeigt als Beispiel eine Zugehörigkeitsfunktion $zUB_B$ zur Farbklasse UB in Abhängigkeit von der Helligkeit B, wie sie im Verfahrensschritt S12 verwendet werden kann. Auf der Abszisse ist der Wert der Helligkeit B, auf der Ordinate ist die Zugehörigkeit $ZUB_B$ zur Farbklasse UB aufgetragen. Der Wert $ZUB_B=0$ bezeichnet die kleinste und der Wert $ZUB_B=1$ die größte Zugehörigkeit $ZUB_B$ zur Farbklasse UB. Diese Definition der Zugehörigkeit gilt für alle folgenden Beispiele.

Mithilfe der durchgezogen eingezeichneten Zugehörigkeitsfunktion $zUB_B$ wird Bildpunkten mit sehr hellen oder sehr dunklen Farben F eine große Zugehörigkeit zur Farbklasse UB zugewiesen. Die dreieckförmige Zugehörigkeitsfunktion $zUB_B$ hat für die Helligkeit B=0 die Zugehörigkeit $ZUB_B=1$. Bis zu einem Wert der Helligkeit UBB1 fällt die Zugehörigkeit $ZUB_B$ linear bis auf Null ab. Zwischen UBB1 und einem Wert der Helligkeit UBB2 bleibt die Zugehörigkeit $ZUB_B=0$ und steigt zwischen UBB2 und dem größten Wert der Helligkeit B=1 linear bis auf $ZUB_B=1$ an. Die Zugehörigkeitsfunktion $zUB_B$ kann vom Benutzer an die jeweiligen Erfordernisse angepaßt werden.

Als Beispiel ist in Figur 5 eine weitere, trapezförmige Zugehörigkeitsfunktion $z'UB_B$ gestrichelt eingezeichnet, bei der die Zugehörigkeit $ZUB_B$ zwischen der Helligkeit B=0 und der Helligkeit UBB3 auf dem Wert $ZUB_B=1$ konstant ist und danach linear bis auf Null abfällt. In einem mittleren Bereich der Helligkeit B ist die Zugehörigkeit $ZUB_B=0$ und steigt zu einer großen Helligkeit B linear an bis $ZUB_B=1$ bei einer Helligkeit UBB4. Zwischen UBB4 und dem Maximalwert der Helligkeit B=1 ist die Zugehörigkeit $ZUB_B=1$ konstant. Bei einer anderen Zugehörigkeitsfunktion $z''UB_B$, die in Figur 5 strichpunktiert abgebildet ist, erfolgt der Abfall von $ZUB_B=1$ nach $ZUB_B=0$ und der Anstieg von $ZUB_B=0$ nach $ZUB_B=1$ nicht linear, sondern in Form einer S-Kurve.

Figur 6 zeigt einen ähnlichen Verlauf einer Zugehörigkeitsfunktion $zUB_S$ für die Zugehörigkeit $ZUB_S$ zur Farbklasse UB als Funktion der Sättigung S. Anstatt der Helligkeit B ist auf der Abszisse die Sättigung S und auf der Ordinate die Zugehörigkeit $ZUB_S$ aufgetragen. Durch die Zugehörigkeitsfunktion $zUB_S$ wird Bildpunkten mit Farben F mit sehr geringer oder mit sehr großer Sättigung S eine große Zugehörigkeit $ZUB_S$ zur Farbklasse UB zugewiesen. Die Zugehörigkeitsfunktion $zUB_S$ fällt von einem Wert der Zugehörigkeit $ZUB_S=1$ bei einer Sättigung S=0 linear bis auf $ZUB_S=0$ ab und behält den Wert $ZUB_S=0$ in einem mittleren Bereich der Sättigung S bei. Anschließend steigt $zUB_S$ linear von $ZUB_S=0$ bis $ZUB_S=1$ bei einer Sättigung S=1 an. Ahnlich Figur 5 können auch hier andere Verläufe der Zugehörigkeitsfunktion verwendet werden.

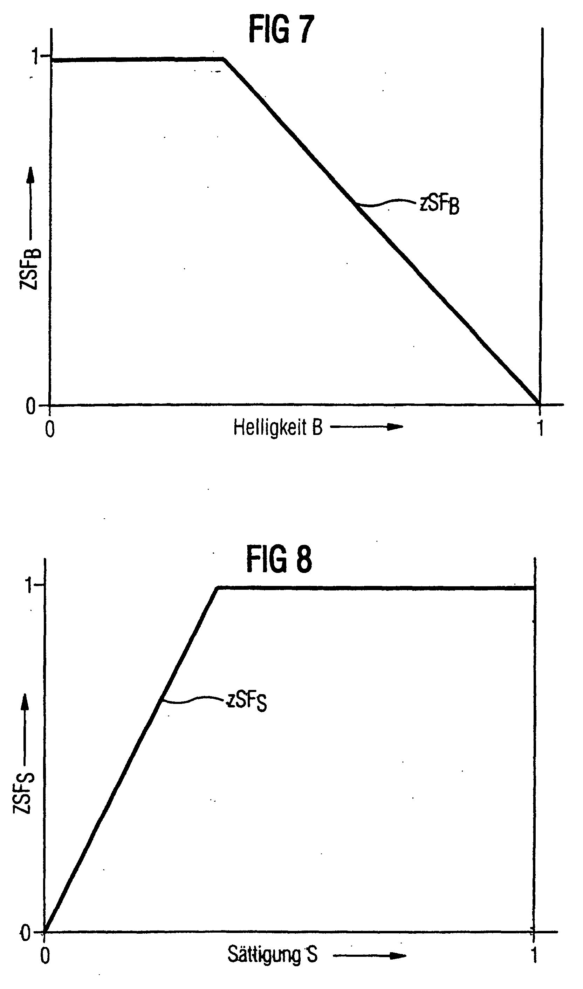

Figur 7 zeigt eine Funktion $zSF_B$ der Zugehörigkeit $ZSF_B$ zur Farbklasse SF abhängig von der Helligkeit B. Auf der Ordinate ist die Zugehörigkeit $ZSF_B$ von 0 bis 1, auf der Abszisse ist die Helligkeit B aufgetragen. Von der Helligkeit B=0 bis zu einer mittleren Helligkeit B hat die Funktion $zSF_B$ die Zugehörigkeit $ZSF_B=1$. Danach fällt die Funktion $zSF_B$ linear von $ZSF_B=1$ bis $ZSF_B=0$ bei maximaler Helligkeit B=1 ab. Farben F mit großer Helligkeit B bekommen hier einen kleinen Wert $ZSF_B$ und Farben F mit kleiner Helligkeit B einen großen Wert $ZSF_B$ zuwiesen. Ähnlich dem vorher gesagten kann der Verlauf der Funktion $zSF_B$ verändert werden.

Figur 8 zeigt ein Beispiel einer Zugehörigkeitsfunktion $zSF_S$ für die Farbklasse SF, wobei hier auf der Abszisse die Sättigung S und auf der Ordinate die Zugehörigkeit $ZSF_S$ zur Farbklasse SF aufgetragen ist. Farben F mit einem großen Wert der Sättigung S wird hier eine große Zugehörigkeit $ZSF_S$ zur Farbklasse SF zugewiesen, während schwach gesättigte Farben F einen kleinen Wert $ZSF_S$ erhalten. Die Zugehörigkeitsfunktion $zSF_S$ steigt linear von $ZSF_S$=0 bei der Sättigung S=0 zu $ZSF_S$=1 bei einer mittleren Sättigung S an und bleibt konstant mit $ZSF_S$=1 bis zur größten Sättigung S=1. Auch in diesem Fall kann der Verlauf der Zugehörigkeit $ZSF_S$ über die Sättigung S verändert werden.

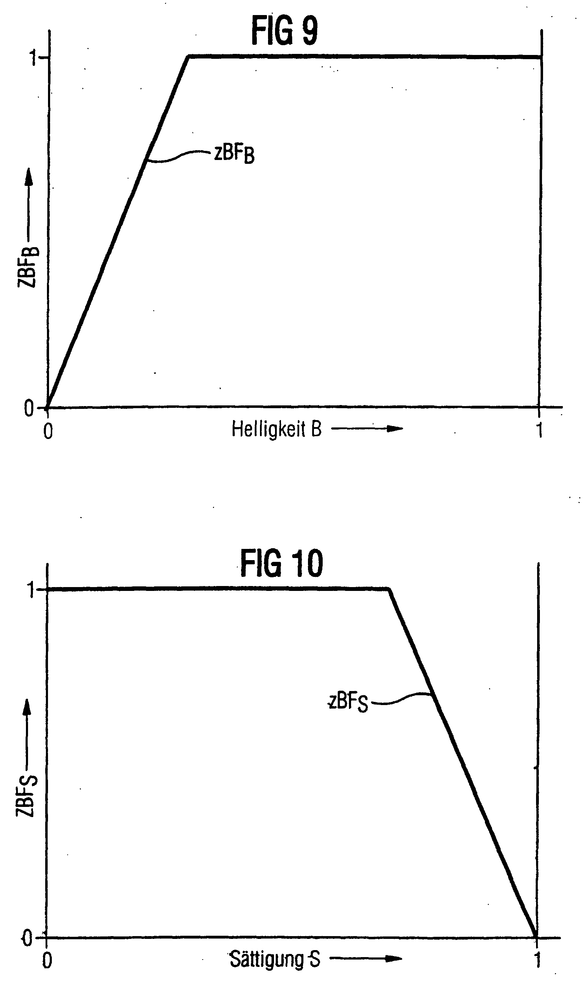

Figur 9 zeigt die Zugehörigkeitsfunktion $zBF_B$ für die Farbklasse BF in Abhängigkeit von der Helligkeit B, die auf der Abszisse aufgetragen ist. Auf der Ordinate ist die Zugehörigkeit $ZBF_B$ zur Farbklasse BF aufgetragen. Die Zugehörigkeitsfunktion $zBF_B$ hat bei der Helligkeit B=0 den Wert $ZBF_B$=0 und steigt linear bis zu einem mittleren Wert der Helligkeit B auf den Wert $ZBF_B$=1 an. Bis zur maximalen Helligkeit B=1 bleibt die Funktion $zBF_B$ auf dem Wert $ZBF_B$=1. Demnach erhalten Farben F und Bildpunkte mit solchen Farben F, die eine große Helligkeit B haben, eine große Zugehörigkeit $ZBF_B$ zur Farbklasse BF zugeordnet.

Figur 10 zeigt die Zugehörigkeit $ZBF_S$ zur Farbklasse BF als Funktion $zBF_S$ von der Sättigung S. Auf der Ordinate ist die Zugehörigkeit $ZBF_S$ und auf der Abszisse die Sättigung S aufgetragen. Die Funktion $zBF_S$ hat konstant den Wert $ZBF_S$=1 von S=0 bis zu einer mittleren Sättigung S und fällt darüber bis S=1 linear auf den Wert $ZBF_S$=0 ab. Dies bedeutet, Bildpunkten mit Farben mit kleiner Sättigung S wird eine große Zugehörigkeit $ZBF_S$ zur Farbklasse BF zugeordnet

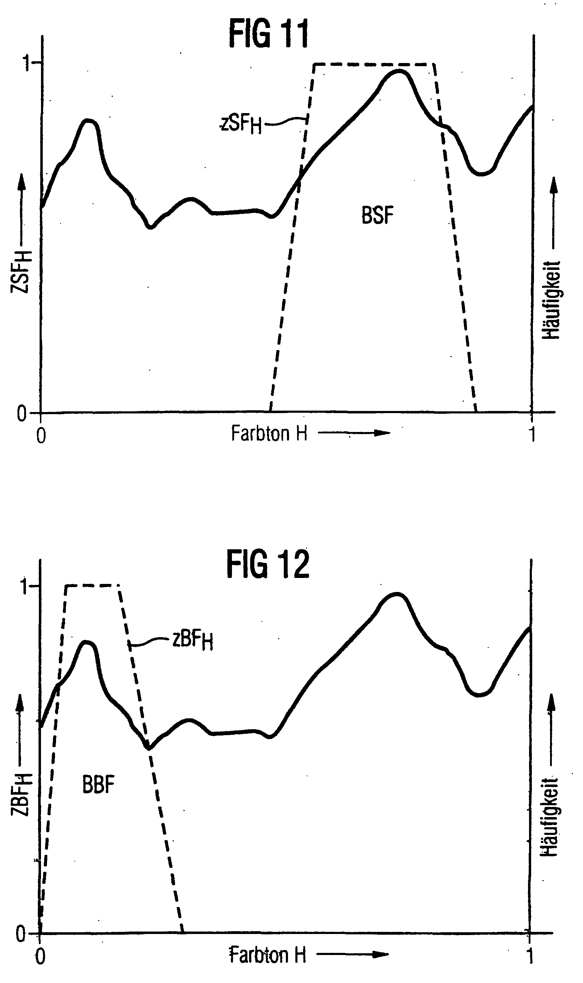

Figur 11 zeigt ein Beispiel für eine im Schritt S16 erfolgte Häufigkeitsanalyse der Farbtöne H eines Formulares. Auf der Abszisse ist der Farbton H aufgetragen. Auf der rechten Seite der Graphik ist auf der Ordinate die Häufigkeit aufgetragen, mit der Bildpunkte denselben Wert H haben. Durchgezogen ist als Histogramm die Häufigkeit der Bildpunkte mit gleichem Farbton H eines analysierten Formulares 10 eingezeichnet. Auf der linken Seite ist auf der Ordinate die Zugehörigkeit $ZSF_H$ zur Farbklasse SF über den Farbton H aufgetragen. Gestrichelt ist für einen Bereich BSF eine Zugehörigkeitsfunktion $zSF_H$ eingezeichnet, die Farbtönen H innerhalb dieses Bereiches BSF jeweils eine Zugehörigkeit $ZSF_H$ zur Farbklasse SF zuordnet. Außerhalb dieses Bereiches BSF ist die Zugehörigkeit $ZSF_H$=0. Mindestens ein solcher Bereich BSF muß im Schritt S18 definiert werden, es können jedoch auch zwei oder mehrere Bereiche sein. Der Verlauf der jeweiligen Zugehörigkeitsfunktion $zSF_H$ läßt sich verändern; er kann zum Beispiel rechteckförmig, trapezförmig wie in Figur 11 oder dreieckförmig sein.

Figur 12 zeigt die Verteilung der Häufigkeit von Bildpunkten mit demselben Farbton H aus Figur 11. Auf der linken Seite der Graphik ist auf der Ordinate die Zugehörigkeit $ZBF_H$ zur Farbklasse BF abhängig vom Farbton H aufgetragen. Eine gestrichelt eingezeichnete Zugehörigkeitsfunktion $zBF_H$ ordnet Farbtönen H innerhalb eines Bereiches BBF eine Zugehörigkeit $ZBF_H$ zur Farbklasse BF zu. Farbtöne außerhalb des Bereiches BBF haben die Zugehörigkeit $ZBF_H$=0. Im Schritt S18 können mehrere solcher Bereiche BBF definiert werden.

## Patentansprüche

1. Verfahren zum Verarbeiten von Bilddaten,
   bei dem mindestens ein Ausschnitt eines Formulares (10) rasterartig abgetastet und in ein Digitalbild mit Bildpunkten (22,24,26) gewandelt wird,
   die Farbe eines jeden Bildpunktes (22,24,26) gemäß der HSB-Farbdarstellung als Farbton H, Sättigung S und Helligkeit B dargestellt wird,
   gemäß der Fuzzy-Technik die Zugehörigkeiten $ZUB_B$ und $ZUB_S$ der . Farbe eines jeden Bildpunktes (22,24,26) zu einer ersten Farbklasae UB aus einer Zugehörigkeitsfunktion $zUB_B$ über die Helligkeit B bzw. aus einer Zugehörigkeitsfunktion $zUB_S$ über die Sättigung S ermittelt werden,
   die Zugehörigkeiten $ZSF_B$, $ZSF_S$ und $ZSF_H$ der Farbe eines jeden Bildpunktes (22,24,26) zu einer zweiten Farbklasse SF aus einer Zugehörigkeitsfunktion $zSF_B$ über die Helligkeit B, einer Zugehörigkeitsfunktion $zSF_S$ über die Sättigung S bzw. aus einer Zugehörigkeitsfunktion $zSF_H$ über den Farbton H ermittelt werden,
   die Zugehörigkeiten $ZBF_B$, $ZBF_S$ und $ZBF_H$ der Farbe eines jeden Bildpunktes (22,24,26) zu mindestens einer dritten Farbklasse (BF) aus einer Zugehörigkeitsfunktion $zBF_B$ über die Helligkeit B, einer Zugehörigkeitsfunktion $zBF_S$ über die Sättigung S bzw. aus einer Zugehörigkeitsfunktion $zBF_H$ über den Farbton H ermittelt werden,
   die Minimalwerte UBMIN = MIN($ZUB_B$,$ZUB_S$),
   SFMIN = MIN($ZSF_B$,$ZSF_S$,$ZSF_H$),
   BFWIN = MIN($ZBF_B$,$ZBF_S$,$ZBF_H$)
   der zugehörigkeiten $ZUB_B$,$ZUB_S$,$ZSF_B$,$ZSF_S$,$ZSF_H$,$ZBF_B$,$ZBF_S$,$ZBF_H$ in den jeweiligen Farbklassen UB,SF,BF ermittelt werden,
   unter den Minimalwerten UBMIN,SFMIN,BFMIN der Maximalwert M ermittelt wird,
   die jeweilige Farbe sowie die zu dieser Farbe gehörenden Bildpunkte (22,24,26) derjenigen Farbklasse UB,SF,BF zugeordnet worden, die zu diesem Maximalwert M gehört,
und bei dem abhängig von der ermittelten Farbklasse UB,SF,BF dem jeweiligen Bildpunkt (22,24,26) ein Grauwert GW zugeordnet wird.

2. Verfahren nach Anspruch 1 **dadurch gekennzeichnet, daß** der Wert der Helligkeit B eines Bildpunktes (22,24,26) in eine skalierte Helligkeit Y mit dem Wertebereich 0 bis 1 umgewandelt wird, und daß der Grauwert GW abhangig von der skalierten Helligkeit Y festgelegt wird.

3. Verfahren nach Anspruch 2 **dadurch gekennzeichnet, daß** dem jeweiligen Bildpunkt (22,24,26) als Grauwert GW die skalierte Heiligkeit Y zugewiesen wird, wenn der Maximalwert M zur ersten Farbklasse UB gehört.

4. Verfahren nach Anspruch 2 oder 3 **dadurch gekennzeichnet, daß** dem Bildpunkt (22,24,26) der Grauwert GW nach der Beziehung

$$GW = MIN(Y,1-SFMIN)$$

zugewiesen wird, wenn der Maximalwert M zur zweiten Farbklasse SF gehört.

5. Verfahren nach Anspruch 2, 3 oder 4 **dadurch gekennzeichnet, daß** dem Bildpunkt (22,24,26) der Grauwert GW gemäß der Beziehung

$$GW = MAX(Y,BFMIN)$$

zugewiesen wird, wenn der Maximalwert M zur dritten Farbklasse BF gehört.

6. Verfahren nach einem der vorhergehenden Ansprüche, **dadurch gekennzeichnet, daß** für jeden Bildpunkt (22,24,26) ein Wert L nach der Beziehung

$$L = MAX(UBMIN,SFMIN,BFMIN)$$

gebildet wird, sodann der Wert SOMIN gemäß der Beziehung

$$SOMIN = 1 - L$$

gebildet wird, worin SOMIN die Zugehörigkeit des Bildpunktes (22,24,26) zu einer vierten Farbklasse SO ist.

7. Verfahren nach Anspruch 6, **dadurch gekennzeichnet, daß** dem jeweiligen Bildpunkt (22,24,26) der vierten Farbklasse SO als Grauwert GW der Minimalwert aus der skalierten Helligkeit Y und dem Wert 1-SOMIN nach der Beziehung

$$GW = MIN(Y,1-SOMIN)$$

zugeordnet wird.

8. Verfahren nach einem der vorhergehenden Ansprüche, **dadurch gekennzeichnet, daß** die Zugehörigkeitsfunktion $zUB_B$ oder $zUB_S$ für Helligkeitswerte B bzw. Sättigungswerte S zwischen einem Minimalwert UBB1 und einem Maximalwert UBB2 den Wert Null hat.

9. Verfahren nach Anspruch 8, **dadurch gekennzeichnet, daß** die Zugehörigkeitsfunktion $zUB_B$ oder $zUB_S$ für kleine Helligkeitswerte B und große Helligkeitswerte B bzw. für kleine Sättigungswerte S und große Sättigungswerte S einen rechteckförmigen, dreieckförmigen, trapezförmigen oder einen S-förmigen Verlauf nach Art einer halben Glockenkurve hat.

**10.** Verfahren nach einem der vorhergehenden Ansprüche, **dadurch gekennzeichnet, daß** die Häufigkeit, mit der Bildpunkte (22,24,26) mit bestimmten Farbtönen H in mindestens einem Ausschnitt des Formulares (10) vorkommen, in Form einer Häufigkeitsverteilung über den Farbton H dargestellt wird, und daß die Zugehörigkeitsfunktionen $zSF_H$,$zBF_H$ in Bereichen (BSF,BBF) mit Farbtönen H aus dieser Häufigkeitsverteilung einen rechteckföroigen, dreieckförmigen, trapezförmigen oder S-förmigen Verlauf nach Art einer halben oder einer ganzen Glockenkurve haben.

**11.** Verfahren nach einem der vorhergehenden Ansprüche, **dadurch gekennzeichnet, daß** die Zugehörigkeitsfunktionen $zSF_B$,$zSF_S$,$zBF_B$,$zBF_S$ einen rechteckförmig, dreieckförmigen, trapezförmigen oder einen S-förmigen Verlauf nach Art einer halben oder einer ganzen Glockenkurve haben.

**12.** Verfahren nach einem der vorhergehenden Ansprüche, **dadurch gekennzeichnet, daß** der zweiten Farbklasse SF überwiegend Farben zugeordnet werden, mit denen Nutzinformationen (12,14,16) auf dem Formular (10) aufgebracht sind.

**13.** Verfahren nach einem der vorhergehenden Ansprüche, **dadurch gekennzeichnet, daß** der dritten Farbklasse BF überwiegend Farben F zugeordnet werden, mit denen Streuinformationen (18,20) auf dem Formular (10) aufgebracht sind.

**14.** Verfahren nach einem der vorhergehenden Ansprüche, **dadurch gekennzeichnet, daß** der vierten Farbklasse SO Farben F zugeordnet werden, die keiner anderen Farbklasse UB,BF,SF zugehörig sind.

## Claims

**1.** Method for processing image data,
wherein at least one section of a form (10) is scanned raster-like and converted into a digital image having picture elements (22, 24, 26),
the colour of each and every picture element (22, 24, 26) is presented according to the HSB colour presentation as hue H, saturation S and brightness B,
in conformity with the fuzzy technology, the memberships $ZUB_B$ and $ZUB_S$ of the colour of each and every picture element (22, 24, 26) in a first colour class UB are determined from a membership function $zUB_B$ via the brightness B or, respectively, from a membership function $zUB_S$ via the saturation S,
the memberships $ZSF_B$, $ZSF_S$ and $ZSF_H$ of the colour of each and every picture element (22, 24, 26) in a second colour class SF are determined from a membership function $zSF_B$ via the brightness B, a membership function $zSF_S$ via the saturation S or, respectively, from a membership function $zSF_H$ via the hue H,
the memberships $ZBF_B$, $ZBF_S$ and $ZBF_H$ of the colour of each and every picture element (22, 24, 26) in at least one third colour class (BF) are determined from a membership function $zBF_B$ via the brightness B, a membership function $zBF_S$ via the saturation S or, respectively, from a membership function $zBF_H$ via the hue H,
the minimal values UBMIN = MIN ($ZUB_B$, $ZUB_S$),
SFMIN = MIN ($ZSF_B$, $ZSF_S$, $ZSF_H$),
BFMIN = MIN ($ZBF_B$, $ZBF_S$, $ZBF_H$)
of the memberships $ZUB_B$, $ZUB_S$, $ZSF_B$, $ZSF_S$, $ZSF_H$, $ZBF_B$, $ZBF_S$, $ZBF_H$ in the respective colour classes UB, SF, BF are determined,
the maximum value M among the minimum values UBMIN, SFMIN, BFMIN is determined,
the respective colour as well as the picture elements (22, 24, 26) belonging to this colour are allocated to that colour class UB, SF, BF that belongs to this maximum value M,
and wherein, dependent on the determined colour class UB, SF, BF a grey scale value GW is allocated to the respective picture element (22, 24, 26).

**2.** Method according to claim 1, **characterized in that** the value of the brightness B of a picture element (22, 24, 26) is converted into a scaled brightness Y with the value range 0 to 1, and **in that** the grey scale value GW is defined dependent on the scaled brightness Y.

**3.** Method according to claim 2, **characterized in that** the scaled brightness Y is allocated to the respective picture element (22, 24, 26) as grey scale value GW when the maximum value M belongs to the first colour class UB.

**4.** Method according to claim 2 or 3, **characterized in that** the grey scale value GW is allocated to the picture element (22, 24, 26) according to the relationship

$$GW = MIN(Y,1\text{-}SFMIN)$$

when the maximum value M belongs to the second colour class SF.

**5.** Method according to claim 2, 3 or 4, **characterized in that** the grey scale value is allocated to the picture element (22, 24, 26) according to the relationship

$$GW = MAX (Y, BFMIN)$$

when the maximum value M belongs to the third colour class BF.

**6.** Method according to one of the preceding claims, **characterized in that** a value L is formed for each picture element (22, 24, 26) according to the relationship

$$L = MAX(UBMIN, SFMIN, BFMIN)$$

the value SOMIN is then formed according to the relationship

$$SOMIN = 1 - L$$

wherein SOMIN is the membership of the picture element (22, 24, 26) in a fourth colour class SO.

**7.** Method according to claim 6, **characterized in that** the minimum value from the scaled brightness Y and the value 1-SOMIN is allocated to the respective picture element (22, 24, 26) of the fourth colour class SO as grey value GW according to the relationship

$$GW = MIN (Y,1\text{-}SOMIN).$$

**8.** Method according to one of the preceding claims, **characterized in that** the membership function $zUB_B$ or $zUB_S$ for brightness values B or, respectively, saturation values S between a minimum value UBB1 and a maximum value UBB2 has the value 0.

**9.** Method according to claim 8, **characterized in that** the membership function $zUB_B$ or $zUB_S$ for low brightness values B and high brightness values B or, respectively, for low saturation values S and high saturation values S has a rectangular, triangular, trapezoidal or an S-shaped curve in the fashion of a half-bell curve.

**10.** Method according to one of the preceding claims, **characterized in that** the frequency of occurrence with which the picture elements (22, 24, 26) with specific hues H occur in at least one section of the form (10) is presented in the form of a frequency distribution over the hue H, and **in that** the membership functions $zSF_H$, $zBF_H$ in regions (BSF, BBF) with hues H from this frequency distribution have a rectangular, triangular, trapezoidal or an S-shaped curve in the fashion of a half-bell or a whole-bell curve.

**11.** Method according to one of the preceding claims, **characterized in that** the membership functions $zSF_B$, $zSF_S$, $zBF_B$, $zBF_S$ have a rectangular, triangular, trapezoidal or an S-shaped curve in the fashion of a half-bell or a whole-bell curve.

**12.** Method according to one of the preceding claims, **characterized in that** colours with which payload information (12, 14, 16) is applied on the form (10) are mainly allocated to the second colour class SF.

**13.** Method according to one of the preceding claims, **characterized in that** colours F with which scatter information (18, 20) is applied on the form (10) are mainly allocated to the third colour class BF.

14. Method according to one of the preceding claims, **characterized in that** the fourth colour class SO has colours F allocated to it that do not belong to any other colour class UB, BF, SF.

## Revendications

1. Procédé de traitement de données d'image, dans lequel
   au moins un extrait d'un formulaire (10) est balayé sous forme de trame et transformé en une image numérique avec des points d'image (22, 24, 26),
   la couleur de chaque point d'image (22, 24, 26) est représentée selon la représentation de couleurs HSB en tant que nuance H, saturation S et luminosité B,
   selon la technique de Fuzzy, les appartenances $ZUB_B$ et $ZUB_S$ de la couleur de chaque point d'image (22, 24, 26) à une première classe de couleurs UB sont déterminées à partir d'une fonction d'appartenance $zUB_B$ par l'intermédiaire de la luminosité B, ou à partir d'une fonction d'appartenance $zUB_S$ par l'intermédiaire de la saturation S,
   les appartenances $ZSF_B$, $ZSF_S$ et $ZSF_H$ de la couleur de chaque point d'image (22, 24, 26) à une deuxième classe de couleurs SF sont déterminées à partir d'une fonction d'appartenance $zSF_B$ par l'intermédiaire de la luminosité B, à partir d'une fonction d'appartenance $zSF_S$ par l'intermédiaire de la saturation S, ou à partir d'une fonction d'appartenance $zSF_H$ par l'intermédiaire de la nuance H,
   les appartenances $ZBF_B$, $ZBF_S$ et $ZBF_H$ de la couleur de chaque point d'image (22, 24, 26) à au moins une troisième classe de couleurs (BF) sont déterminées à partir d'une fonction d'appartenance $zBF_B$ par l'intermédiaire de la luminosité B, à partir d'une fonction d'appartenance $zBF_S$ par l'intermédiaire de la saturation S, ou à partir d'une fonction d'appartenance $zBF_H$ par l'intermédiaire de la nuance H,
   les valeurs minimales UBMIN = MIN ($ZUB_B$, $ZUB_S$), SFMIN = MIN ($ZSF_B$, $ZSF_S$, $ZSF_H$), BFMIN = MIN ($ZBF_B$, $ZBF_S$, $ZBF_H$) des appartenances $ZUB_B$, $ZUB_S$, $ZSF_B$, $ZSF_S$, $ZSF_H$, $ZBF_B$, $ZBF_S$, $ZBF_H$ sont déterminées dans les classes de couleurs respectives UB, SF, BF,
   parmi les valeurs minimales UBMIN, SFMIN, BFMIN on détermine la valeur maximale M,
   la couleur respective ainsi que les points d'image (22, 24, 26) sont associés à celle des classes de couleurs UB, SF, BF qui appartient à cette valeur maximale M,
   et dans lequel, indépendamment de la classe de couleurs UB, SF, BF déterminée, une valeur de gris GW est associée à chacun des points d'image (22, 24, 26).

2. Procédé selon la revendication 1, **caractérisé en ce que** la valeur de luminosité B d'un point d'image (22, 24, 26) est transformée en une luminosité cadrée Y dans la plage de valeurs de 0 à 1, et que la valeur de gris GW est définie en fonction de la luminosité Y cadrée.

3. Procédé selon la revendication 2, **caractérisé en ce qu'**à chacun des points d'image (22, 24, 26) la luminosité Y cadrée est associée en tant que valeur de gris GW, si la valeur maximale M appartient à la première classe de couleurs UB.

4. Procédé selon la revendication 2 ou 3, **caractérisé en ce qu'**au point d'image (22, 24, 26) est associée la valeur de gris GW selon la relation

$$GW = MIN (Y, 1-SFMIN)$$

   si la valeur maximale M appartient à la deuxième classe de couleurs SF.

5. Procédé selon la revendication 2, 3 ou 4, **caractérisé en ce qu'**au point d'image (22, 24, 26) est associée la valeur de gris GW selon la relation

$$GW = MAX (Y, BFMIN)$$

   si la valeur maximale M appartient à la troisième classe de couleurs BF.

6. Procédé selon l'une des revendications précédentes, **caractérisé en ce que** pour chaque point d'image (22, 24, 26) est calculée une valeur L selon la relation

$$L = MAX (UBMIN, SFMIN, BFMIN)$$

puis la valeur SOMIN selon la relation

$$SOMIN = 1 - L$$

où SOMIN est l'appartenance du point d'image (22, 24, 26) à une quatrième classe de couleurs SO.

**7.** Procédé selon la revendication 6, **caractérisé en ce qu'**à chaque point d'image (22, 24, 26) de la quatrième classe de couleurs SO est associée, en tant que valeur de gris GW, la valeur minimale résultant de la luminosité cadrée Y et de la valeur 1-SOMIN selon la relation

$$GW = MIN (Y, 1\text{-}SOMIN).$$

**8.** Procédé selon l'une des revendications précédentes, **caractérisé en ce que** la fonction d'appartenance $zUB_B$ ou $zUB_S$ pour les valeurs de luminosité B ou les valeurs de saturation S présente la valeur zéro entre une valeur minimale UBB1 et une valeur maximale UBB2.

**9.** Procédé selon la revendication 8, **caractérisé en ce que** la fonction d'appartenance $zUB_B$ ou $zUB_S$ pour des valeurs de luminosité B réduites et pour des valeurs de luminosité B élevées, ou pour des valeurs de saturation S réduites et pour des valeurs de saturation S élevées, présente une allure de forme rectangulaire, triangulaire, trapézoïdale, ou en S telle qu'une demi-courbe en cloche.

**10.** Procédé selon l'une des revendications précédentes, **caractérisé en ce que** la fréquence à laquelle se produisent des points d'image (22, 24, 26) avec des nuances H déterminées sur au moins un extrait du formulaire (10) est illustrée sous la forme d'une répartition de fréquence par l'intermédiaire de la nuance H, et que les fonctions d'appartenance $zSF_H$, $zBF_H$ dans des zones (BSF, BBF) avec des nuances H de cette répartition de fréquence présentent une allure de forme rectangulaire, triangulaire, trapézoïdale, ou en S telle qu'une demi-courbe ou une courbe complète en cloche.

**11.** Procédé selon l'une des revendications précédentes, **caractérisé en ce que** les fonctions d'appartenance $zSF_B$, $zSF_S$, $zBF_B$, $zBF_S$ présentent une allure de forme rectangulaire, triangulaire, trapézoïdale, ou en S telle qu'une demi-courbe ou une courbe complète en cloche.

**12.** Procédé selon l'une des revendications précédentes, **caractérisé en ce qu'**à la deuxième classe de couleurs SF sont notamment associées des couleurs F à l'aide desquelles des informations utiles (12, 14, 16) sont appliquées sur le formulaire (10).

**13.** Procédé selon l'une des revendications précédentes, **caractérisé en ce qu'**à la troisième classe de couleurs BF sont notamment associées des couleurs F à l'aide desquelles des informations dispersées (18, 20) sont appliquées sur le formulaire (10).

**14.** Procédé selon l'une des revendications précédentes, **caractérisé en ce qu'**à la quatrième classe de couleurs SO sont associées des couleurs F qui n'appartiennent à aucune des autres classes de couleurs UB, BF, SF.

FIG 1
10
11
22
26
24
20
18
16
14
12

FIG 2
30
16
14
12

FIG 3

Start
S10
unbunt
S12
Ausschnitt
S14
Analyse
S16
Farbklassen
S18
Grauwert
S20
Ende
S22

FIG 4
Skalierung
S24
S20
S26
Blindfarbe
J
N
Aufhellung
S28
Schreibmittel
J
S36
N
Abdunklung
S30
unbunt
S38
J
N
Bleibt gleich
Sonst Abdunklung
S32
S40
Rückskalierung
S34

FIG 5
1
0
UBB3
UBB4
z'UBB
z''UBB
zUBB
UBB1
UBB2
ZUBB
0
Helligkeit B
1

FIG 6
1
0
zUBS
ZUBS
0
Sättigung S
1

FIG 7
1
0
ZSF$_B$
zSF$_B$
0
Helligkeit B
1

FIG 8
1
0
ZSF$_S$
zSF$_S$
0
Sättigung S
1

FIG 9
1
0
zBF$_B$
ZBF$_B$
0
Helligkeit B
1

FIG 10
1
0
zBF$_S$
ZBF$_S$
0
Sättigung S
1

FIG 11
1
0
zSFH
BSF
ZSFH
Häufigkeit
0
Farbton H
1

FIG 12
1
0
zBFH
BBF
ZBFH
Häufigkeit
0
Farbton H
1